# EUROPEAN PATENT APPLICATION

(11) **EP 4 489 104 A1**
(43) Date of publication of application: **08.01.2025**
(21) Application number: 23788654.4
(22) Date of filing: 14.04.2023
(51) Int. Cl.: H01M 4/133, H01M 4/587, H01M 4/38, H01M 4/134, H01M 4/1393, H01M 4/1395, H01M 4/02

(54) **NEGATIVE ELECTRODE AND SECONDARY BATTERY COMPRISING SAME**

(30) Priority: 15.04.2022 KR 20220046986
(71) Applicant: LG Energy Solution, Ltd., Seoul 07335 (KR)
(72) Inventor: JO, Mi Ru, Daejeon 34122 (KR); PARK, Sung Bin, Daejeon 34122 (KR)
(74) Representative: Plasseraud IP
(86) International application number: PCT/KR2023/005112
(87) International publication number: WO 2023/200305

(57) **Abstract**

The present invention provides a negative electrode including a negative electrode current collector; a negative electrode active material layer that is disposed on at least one surface of the negative electrode current collector and includes a negative electrode active material; and a coating layer including a negative-type (N-type) organic active material, wherein the negative electrode active material layer includes an inclined part provided in at least one side thereof by partitioning the negative electrode active material layer, and a flat part provided excluding the inclined part, the inclined part is inclined towards the surface of the negative electrode current collector, and the coating layer is disposed on at least a portion of the inclined part.

## Description

### TECHNICAL FIELD

### Cross-reference to Related ApplicationsP

This application claims the benefit of Korean Patent Application No. 10-2022-0046986, filed on April 15, 2022, in the Korean Intellectual Property Office, the disclosure of which is incorporated herein in its entirety by reference.

### Technical Field

The present disclosure relates to a negative electrode and a secondary battery including the same.

### BACKGROUND ART

There is a need to develop battery technology for efficiently storing and utilizing electrical energy as personal IT devices and computer networks are developed with the recent development of information society and the accompanying dependency of society as a whole on the electrical energy is increased.

Particularly, studies on electricity storage devices, such as electric double-layer capacitors and lithium ion batteries, have been extensively conducted as an interest in solving environmental problems and realizing a sustainable circular society emerges. Among these battery technologies, lithium secondary batteries, which are battery systems having the theoretically highest energy density, are in the spotlight.

The lithium secondary battery generally includes a positive electrode, a negative electrode, a separator interposed between the positive electrode and the negative electrode, an electrolyte, an organic solvent, etc. In addition, the positive electrode and negative electrode may have an active material layer including a positive electrode active material and a negative electrode active material, respectively, formed on a current collector.

Among these, the negative electrode active material layer is generally prepared by applying, drying, and rolling, to a negative electrode current collector, a negative electrode slurry prepared by adding a negative electrode active material to a solvent for forming a negative electrode slurry. In this case, the end part of the negative electrode active material layer may be inclined due to the fluid characteristics of the negative electrode slurry, and in this case, there is a limitation in that the adhesive strength between the negative electrode and the separator is deteriorated, and the inclined end part does not sufficiently receive lithium from the positive electrode facing the negative electrode inclined part to precipitate lithium. In addition, there is a limitation in that a polarization phenomenon of an electrolyte solution occurs due to the inclined end part of the negative electrode, resulting in an increase in resistance and overvoltage, which causes elution of transition metals of the positive electrode active material and acceleration of the side reaction of the electrolyte solution, resulting in deterioration of cell performance.

Korean Patent Laid-Open Publication No. 10-2021-0114376 discloses an electrode for a lithium battery, a lithium battery including the same, and a method for manufacturing the lithium battery, but does not provide an alternative to the above-mentioned limitations.

### [Prior Art Document]

### [PATENT DOCUMENT]

Korean Patent Application Laid-open Publication No. 10-2021-0114376

### DISCLOSURE OF THE INVENTION

### TECHNICAL PROBLEM

An aspect of the present invention provides a negative electrode having, on a negative electrode inclined part, a coating layer including a negative-type (N-type) organic active material, thereby improving the adhesive strength between the negative electrode and a separator, suppressing the overvoltage formation in the negative electrode inclined part, and preventing lithium precipitation, and thus efficiently improving cell performance, specifically, charge and discharge efficiency and life performance of the cell.

Another aspect of the present invention provides a secondary battery including the above-described negative electrode.

### TECHNICAL SOLUTION

According to an aspect of the present invention, there is provided a negative electrode including a negative electrode current collector; a negative electrode active material layer that is disposed on at least one surface of the negative electrode current collector and includes a negative electrode active material; and a coating layer including a negative-type (N-type) organic active material, wherein the negative electrode active material layer includes an inclined part provided in at least one side thereof by partitioning the negative electrode active material layer, and a flat part provided excluding the inclined part, the inclined part is inclined towards the surface of the negative electrode current collector, and the coating layer is disposed on at least a portion of the inclined part.

According to another aspect of the present invention, there is provided a lithium secondary battery including: the above-described negative electrode; a positive electrode facing the negative electrode; a separator interposed between the negative electrode and the positive electrode; and an electrolyte.

### ADVANTAGEOUS EFFECTS

The negative electrode according to the present disclosure includes: a negative electrode active material layer including an inclined part inclined towards the surface of a negative electrode current collector; and a coating layer disposed on at least a portion of the inclined part, wherein the coating layer includes a negative-type (N-type) organic active material. The N-type organic active material may provide radicals according to structural characteristics thereof, and the presence of such radicals may make it possible to intercalate and deintercalate lithium ions through oxidation and reduction reactions. The coating layer prevents overvoltage caused by the polarization of the concentration of an electrolyte caused by the inclination of the negative electrode inclined part, and suppresses an increase in resistance caused by the side reaction of the electrolyte and lithium precipitation caused by insufficient reception of lithium from the positive electrode facing the negative electrode inclined part, thereby improving charge and discharge efficiency and life characteristics of the negative electrode and a lithium secondary battery including the same.

### BRIEF DESCRIPTION OF THE DRAWINGS

FIG. 1 is a schematic side view for specifically explaining a negative electrode of the present disclosure;
FIG. 2 is a schematic plan view for specifically explaining the negative electrode of the present disclosure;
FIG. 3 is a graph of a thickness profile measured by using a rotary caliper in negative electrodes of Example 1 and Comparative Example 1; and
FIG. 4 is a graph obtained by measuring cycle capacity retention of secondary batteries of Examples 1 to 3 and Comparative Example 1.

### MODE FOR CARRYING OUT THE INVENTION

Terms or words used in this specification and claims should not be interpreted as being limited to a conventional or dictionary meaning, and should be interpreted as the meaning and concept that are consistent with the technical spirit, based on the principle that an inventor can appropriately define the concepts of terms in order to explain the invention in the best ways.

Also, it will be further understood that the terms "include," "comprise," or "have" in this specification specify the presence of stated features, numbers, steps, elements, or combinations thereof, but do not preclude the presence or addition of one or more other features, numbers, steps, elements, or combinations thereof.

In the present specification, an average particle diameter (D₅₀) may be defined as a particle diameter at a cumulative volume of 50% in a particle size distribution curve. The average particle diameter (D₅₀), for example, may be measured by using a laser diffraction method. The laser diffraction method may generally measure a particle diameter ranging from a submicron level to several millimeters, and may obtain highly reproducible and high resolution results.

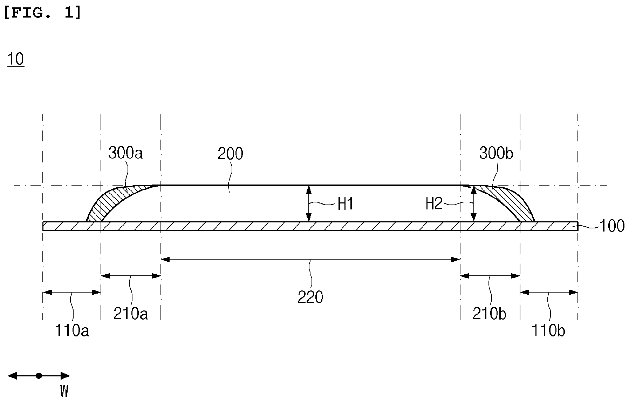

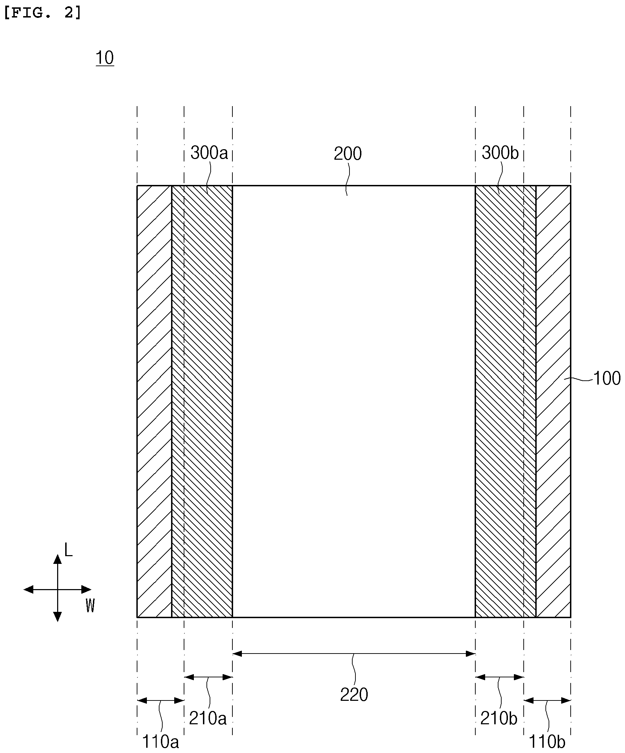

Hereinafter, embodiments of the present invention will be described in detail with reference to the accompanying drawings. Specifically, FIG. 1 is a schematic side view for explaining a negative electrode of the present disclosure. Also, FIG. 2 is a schematic plan view for explaining the negative electrode of the present disclosure. In the following description of the present invention, detailed descriptions related to well-known functions or configurations may be omitted in order not to unnecessarily obscure subject matters of the present invention.

### Negative Electrode

The present disclosure provides a negative electrode 10. Specifically, the negative electrode 10 may be a negative electrode for a lithium secondary battery.

The negative electrode 10 according to the present disclosure includes: a negative electrode current collector 100; a negative electrode active material layer 200 that is disposed on at least one surface of the negative electrode current collector 100 and includes a negative electrode active material; and coating layers 300a and 300b including a negative-type (N-type) organic active material, wherein the negative electrode active material layer 200 includes inclined parts 210a and 210b provided in at least one side thereof by partitioning the negative electrode active material layer, and a flat part 220 provided excluding the inclined parts 210a and 210b, the inclined parts 210a and 210b have an incline towards the surface of the negative electrode current collector 100, and the coating layers 300a and 300b are disposed on at least a portion of the inclined parts 210a and 210b.

In general, a negative electrode active material layer is generally prepared by applying, drying, and rolling, to a negative electrode current collector, a negative electrode slurry prepared by adding a negative electrode active material to a solvent for forming a negative electrode slurry. In this case, the negative electrode slurry has fluid characteristics, and thus the formed negative electrode active material layer has inclined parts or end parts inclined towards the surface of the negative electrode current collector. Since the negative electrode active material layer is not sufficiently loaded in the inclined part having the incline, lithium ions moved from the positive electrode facing the inclined part cannot be sufficiently intercalated, thereby causing a limitation in that lithium is precipitated to the outside. In addition, there is a limitation in that a polarization phenomenon of an electrolyte solution occurs due to the inclined end part of the negative electrode, resulting in an increase in resistance and overvoltage, which causes elution of transition metals of the positive electrode active material and acceleration of the side reaction of the electrolyte solution, resulting in deterioration of cell performance.

In order to solve such limitations, the negative electrode according to the present disclosure includes the negative electrode active material layer including the inclined part inclined towards the surface of the negative electrode current collector, and a coating layer disposed on at least a portion of the inclined part, wherein the coating layer includes an N-type organic active material. The N-type organic active material may provide radicals according to structural characteristics thereof, and the presence of such radicals may make it possible to intercalate and deintercalate lithium ions through oxidation and reduction reactions. Such a coating layer prevents overvoltage caused by the polarization of the concentration of an electrolyte caused by the inclination of the negative electrode inclined part, and suppresses an increase in resistance caused by the side reaction of the electrolyte and lithium precipitation caused by insufficient reception of lithium from the positive electrode facing the negative electrode inclined part, thereby improving charge and discharge efficiency and life characteristics of the negative electrode and a lithium secondary battery including the same.

The negative electrode current collector 100 is not particularly limited so long as it has high conductivity without causing adverse chemical changes in the battery. Specifically, the negative electrode current collector 100 may include at least one selected from the group consisting of copper, stainless steel, aluminum, nickel, titanium, sintered carbon, and aluminum-cadmium alloy, and specifically, may include copper.

The negative electrode current collector 100 may typically have a thickness of 3 um to 500 µm.

The negative electrode current collector 100 may have microscopic irregularities formed on the surface thereof to enhance the adhesion of the negative electrode active material. For example, the negative electrode current collector may be used in various shapes such as a film, a sheet, a foil, a net, a porous body, a foam body, and a non-woven fabric body.

The negative electrode active material layer 200 is disposed on at least one surface of the negative electrode current collector 100. Specifically, the negative electrode active material layer 200 may be disposed on one surface or both surfaces of the negative electrode current collector 100.

The negative electrode active material layer may include inclined parts 210a and 210b provided in at least one side thereof by partitioning the negative electrode active material layer, and a flat part 220 provided excluding the inclined parts 210a and 210b. In the specification, the inclined parts 210a and 210b and the flat part 220 may be provided by abstractly partitioning the negative electrode active material layer in order to specify the formation position of the coating layers 300a and 300b which will be described later as illustrated in FIG. 1. For example, the inclined parts 210a and 210b and the flat part 220 may have the same composition, or may be prepared with the same negative electrode slurry.

In the specification, the phrase "at least one side of the negative electrode active material layer" may mean at least one side of a width direction of the negative electrode active material layer (for example, the direction of arrow W in FIGS. 1 and 2). In this case, the "width direction" may mean a direction perpendicular to the coating direction of the negative electrode active material layer. The "width direction" may be understood as a concept opposite to the "longitudinal direction (for example, the direction of arrow L in FIG. 2)" which is the coating direction of the negative active material layer.

The inclined part may be provided by partitioning at least one side of the negative electrode active material layer. Specifically, the inclined part may be provided in one side by partitioning the negative electrode active material layer or both sides thereof. In FIGS. 1 and 2, the inclined parts 210a and 210b are illustrated as being provided by partitioning both sides of the negative electrode active material layer, but the present invention is not limited thereto, and the negative electrode active material layer may be partitioned into one inclined part and the other flat part. As illustrated in FIG. 1, the inclined parts 210a and 210b may be inclined towards the surface of the negative electrode current collector 100. Specifically, the inclined parts 210a and 210b may be continuously inclined towards the surface of the negative electrode current collector 100. The inclination of the inclined parts 210a and 210b may be, for example, formed according to the fluid characteristics of the negative electrode slurry when the negative electrode slurry is applied for preparing the negative electrode active material layer. The inclination of the inclined parts may cause insufficient intercalation of lithium ions moved from the positive electrode facing the inclined parts, thereby causing limitations of a decrease in charge and discharge efficiency and deterioration of life characteristics, but the presence of the coating layers 300a and 300b, which will be described later, may prevent these limitations and the capacity, charge and discharge efficiency, and life characteristics of the negative electrode may be improved.

The inclined angles, widths, and the like of the inclined parts 210a and 210b may be determined by, for example, viscosity, application conditions, drying conditions, and the like of the negative electrode slurry for preparing the negative electrode active material layer, but are not particularly limited thereto.

The flat part 200 may be a region provided by partitioning the negative electrode active material layer except for the inclined parts 210a and 210b thereof. Specifically, the flat part 200 may have substantially no incline or may form a substantially flat surface. The flat part 200 is only a concept for distinguishing from the inclined parts 210a and 210b that are inclined towards the surface of the negative electrode current collector 100, and may not have the same thickness or height as a whole.

The negative active material layer 200 may include a negative active material.

The negative electrode active material may include at least one selected from among a carbon-based active material and a (metalloid-) metal-based active material, as a material capable of intercalating/deintercalating lithium.

The carbon-based active material may include at least one selected from the group consisting of artificial graphite, natural graphite, hard carbon, soft carbon, carbon black, graphene, and fibrous carbon.

The (metalloid-) metal-based active material includes at least one selected from the group consisting of: at least one (metalloid) metal selected from the group consisting of Li, Cu, Ni, Na, K, Rb, Cs, Fr, Be, Mg, Ca, Sr, Si, Sb, Pb, In, Zn, Ba, Ra, Ge, Al, V, Ti, and Sn; an alloy of lithium and at least one (metalloid) metal selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn; a composite of carbon and at least one (metalloid) metal selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn; and an oxide of at least one (metalloid) metal selected from the group consisting of Li, Cu, Ni, Na, K, Rb, Cs, Fr, Be, Mg, Ca, Sr, Si, Sb, Pb, In, Zn, Ba, Ra, Ge, Al, V, Ti, and Sn.

More specifically, the (metalloid-) metal-based active material may include at least one silicon-based active material selected from SiOₓ (0≤x<2) and a silicon-carbon composite. Since the silicon-based active material has an excellent capacity, the capacity improvement effect of the above-described negative electrode may be more preferably achieved.

The negative electrode active material layer may include the negative electrode active material in an amount of 60 wt% or more, specifically 60 wt% to 99 wt%.

The negative electrode active material layer 200 may include at least one selected from a negative electrode binder, a negative electrode conductive agent, and a thickener, together with the negative electrode active material.

The negative electrode binder is used to improve the adhesion between the negative electrode active material layer and the negative electrode current collector and improve the battery performance, and may include, for example, at least one selected from the group consisting of polyvinylidene fluoride-hexafluoropropylene copolymer (PVDF-co-HFP), polyvinylidene fluoride (PVDF), polyacrylonitrile, polymethylmethacrylate, polyvinyl alcohol, carboxymethylcellulose (CMC), starch, hydroxypropyl cellulose, regenerated cellulose, polyvinylpyrrolidone, polytetrafluoroethylene, polyethylene, polypropylene, polyacrylic acid, ethylene-propylene-diene monomer (EPDM), sulfonated EPDM, styrene butadiene rubber (SBR), fluorine rubber, and a material in which hydrogen thereof is substituted with Li, Na, Ca, or the like, and may also include various copolymers thereof.

The negative electrode binder may be included in the negative electrode active material layer above in an amount of 0.5 wt% to 20 wt%.

The negative electrode conductive agent is not particularly limited as long as it has conductivity without causing adverse chemical changes in the battery, and, conductive materials, for example, graphite such as natural graphite and artificial graphite; carbon black such as acetylene black, Ketjen black, channel black, furnace black, lamp black, and thermal black; conductive fibers such as carbon fibers or metal fibers; conductive tubes such as carbon nanotubes; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used.

The negative electrode conductive agent may be included in the negative electrode active material layer in an amount of 0.5 wt% to 20 wt%.

As the thickener, all thickeners used in conventional lithium secondary batteries may be used, and an example thereof include carboxymethylcellulose (CMC).

The height or thickness of the negative electrode active material layer based on the surface of the negative electrode current collector may be 10 um to 300 um, preferably 50 um to 150 µm.

The coating layers 300a and 300b may be disposed on at least a portion of the inclined parts 210a and 210b. Specifically, the coating layers 300a and 300b may be disposed on the inclined parts 210a and 210b along the inclined surfaces of the inclined parts 210a and 210b.

The coating layers 300a and 300b include an N-type organic active material.

In the specification, the organic active material is an organic compound and may be defined as a material capable of reversible oxidation and reduction reactions. In this case, the electrochemical activity of the organic active material may contribute to electron transport and charge stability, and the bond, the functional group, or the conjugated structure having the electrochemical activity may reversibly form the bond with the lithium cation of the lithium salt contained in the electrolyte solution or with the opposite anion thereof. Meanwhile, the organic active material may be classified into an N-type organic active material capable of providing electrons, a positive-type (P-type) organic active material capable of receiving electrons, or a bipolar-type (B-type) organic active material capable of providing or receiving electrons, depending on the role of oxidation and reduction reactions.

In this case, the N-type organic active material may form radicals by elements and/or functional groups in the compound structure, and/or resonance structures of the compound structure, and may provide the radicals to lithium ions (Li⁺). The N-type organic active material may provide radicals to lithium ions (Li⁺), resulting in oxidation and reduction reactions, and accordingly, the lithium ions and the N-type organic active material may form a reversible bonding structure. Accordingly, the coating layer including the N-type organic active material may enable intercalation and deintercalation of lithium ions according to oxidation and reduction reactions.

Since the coating layers 300a and 300b are disposed on at least a portion of the inclined parts 210a and 210b of the negative electrode active material layer 200 and include the N-type organic active material, lithium ions may be easily received from the positive electrode facing the inclined parts 210a and 210b. Accordingly, the negative electrode according to the present disclosure suppresses the lithium precipitation which may occur due to the absence of the coating layer, and prevents the consumption of electrolyte solution, the increase of resistance, and the formation of overvoltage occurring due to the space between the inclined parts 210a and 210b and the positive electrode facing the inclined parts, thereby significantly improving the charge and discharge efficiency and life performance of the negative electrode.

The coating layers 300a and 300b may be disposed on at least a portion of the inclined parts 210a and 210b of the negative electrode active material layer 200, and specifically, may be disposed to cover the entire inclined parts 210a and 210b of the negative electrode active material layer 200. Alternatively, the coating layers 300a and 300b may be disposed to cover the entire inclined parts 210a and 210b of the negative electrode active material layer 200 and at least a portion of the uncoated parts 110a and 110b of the negative electrode current collector 100.

In the present disclosure, the maximum height H2 of the coating layers 300a and 300b may be equal to or less than the maximum height H1 of the negative electrode active material layer based on the surface of the negative electrode current collector 100. Specifically, the maximum height H2 of the coating layer may be the same as the maximum height H1 of the negative electrode active material layer based on the surface of the negative electrode current collector. That is, the maximum distance between the coating layers 300a and 300b formed or disposed on the inclined parts 210a and 210b and the surface of the negative electrode current collector 100 may not exceed the maximum distance between the negative electrode active material layer 200 and the surface of the negative electrode current collector 100, and accordingly, the structural stability of the negative electrode may be improved by achieving the overall flatness of the negative electrode, and intercalation and deintercalation of lithium between the inclined parts 210a and 210b and the positive electrode facing the inclined parts may be smoothly performed.

At least a portion of the coating layers 300a and 300b may have a flat surface having the same height as the maximum height H1 of the negative electrode active material layer based on the surface of the negative electrode current collector 100.

In the specification, the N-type organic active material may be an organic compound capable of providing radicals to lithium ions, or a metal salt of the organic compound.

Specifically, the N-type organic active material may include at least one selected from the group consisting of a carbonyl-based compound, an imine-based compound, a nitrile-based compound, an organic sulfur-based compound, and an azo-based compound, and specifically, may include a carbonyl-based compound. The N-type organic active material may be a metal salt of the above-described compounds, and more specifically, a lithium salt of the above-described compounds. Since radicals may be provided to lithium ions by a functional group such as a carbonyl group, an imine group, a nitrile group, sulfur, an azo group, or a conjugated structure linked to the functional group, the lithium ions may be easily intercalated and deintercalated by the coating layer.

Specifically, the N-type organic active material may include at least one selected from the group consisting of p-benzoquinone, anthraquinone, dilithium terephthalate, tetra lithium salt of 2,5-dihydroxy terephthalate, 7,7,8,8-tetracyanoquinodimethane (TCNQ), phenylazo benzoic acid lithium salt (PBALS), 1,4,5,8-naphthalenetetracarboxylic dianhydride, polydopamine, phenazine, poly (1,6-dihydropyrazino[2,3g]quinoxaline-2,3,8-triyl-7-(2H)-ylidene-7,8-dimethylidene) (PQL), and poly[chalcogenoviologen-alt-triphenylamine] (the chalcogen element may be tellurium).

The N-type organic active material may be included in the coating layers 300a and 300b in an amount of 15 wt% to 95 wt%, specifically 40 wt% to 70 wt%, and more specifically 50 wt% to 65 wt%, and when the N-type organic active material is within the above range, it is preferable in that it is possible to sufficiently secure oxidation and reduction reaction sites with lithium ions while preventing deterioration of electronic conductivity due to an excessive content of the N-type organic active material.

The coating layers 300a and 300b may further include a binder together with the N-type organic active material. The binder may be used to improve the adhesion between the coating layer and the negative electrode active material layer or the negative electrode current collector.

The binder may include, for example, at least one selected from the group consisting of a polyvinylidene fluoride-hexafluoropropylene copolymer (PVDF-co-HFP), polyvinylidene fluoride (PVDF), polyacrylonitrile, polymethylmethacrylate, polyvinyl alcohol, carboxymethyl cellulose (CMC), starch, hydroxypropyl cellulose, regenerated cellulose, polyvinylpyrrolidone, tetrafluoroethylene, polyethylene, polypropylene, polyacrylic acid, an ethylene-propylene-diene monomer (EPDM), a sulfonated EPDM, a styrene-butadiene rubber (SBR), a fluorine rubber, and a material in which hydrogen thereof is substituted with Li, Na, Ca, or the like, and may also include various copolymers thereof.

The binder may be included in the coating layers 300a and 300b in an amount of 1 wt% to 10 wt%, and specifically, 3 wt% to 10 wt%.

The coating layers 300a and 300b may further include the conductive agent for improving conductivity.

The conductive agent is not particularly limited as long as it has conductivity without causing adverse chemical changes in the battery, and, conductive materials, for example, graphite such as natural graphite and artificial graphite; carbon black such as acetylene black, Ketjen black, channel black, furnace black, lamp black, and thermal black; conductive fibers such as carbon fibers or metal fibers; conductive tubes such as carbon nanotubes; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used.

The conductive agent may be included in the coating layer in an amount of 3 wt% to 80 wt%, particularly 25 wt% to 55 wt%, and more particularly 30 wt% to 45 wt%.

When the conductive agent is further included in the coating layer, the ratio of the weight of the N-type organic active material to the weight of the conductive agent may be 0.5 to 3.5, specifically 0.7 to 2.8, and more specifically 1.1 to 2.2, and when the weight ratio is within the range, it is preferable in that it is possible to implement the coating layer having improved conductivity while sufficiently securing oxidation and reduction reaction sites with lithium ions.

Meanwhile, when the coating layer includes a binder and/or a conductive agent together with the N-type organic active material, the coating layer may include the binder and/or the conductive agent in a weight percentage (100 wt% - a weight percentage with respect to the weight of the coating layer of the N-type organic active material) corresponding to the remaining amount of the weight percentage with respect to the weight of the coating layer of the N-type organic active material.

In the present disclosure, the negative electrode current collector may include uncoated parts 110a and 110b. The uncoated parts 110a and 110b may mean parts of the negative electrode current collector on the surface of which the negative electrode active material layer is not disposed. As illustrated in FIGS. 1 and 2, the coating layers 300a and 300b may be disposed on at least a portion of the surfaces of the uncoated parts 110a and 110b. In addition, the negative electrode active material layer and the coating layer may not be disposed on the surfaces of the uncoated parts 110a and 110b.

In particular, as illustrated in FIGS. 1 and 2, the negative electrode current collector may include the uncoated parts 110a and 110b which are disposed at least one side thereof and in which the negative electrode active material layer 200 is not disposed, the inclined parts 210a and 210b may be adjacent to the uncoated parts 110a and 110b, and the flat part 220 may be spaced apart from the uncoated parts 110a and 110b.

In the specification, the phrase "at least one side of the negative electrode current collector" may mean at least one side of a width direction (for example, the direction of arrow W in FIG. 2) of the negative electrode current collector. In this case, the "width direction" may mean a direction perpendicular to the coating direction of the negative electrode active material layer. The "width direction" may be understood as a concept opposite to the "longitudinal direction (for example, the direction of arrow L in FIG. 2)" which is the coating direction of the negative active material layer.

The uncoated parts may be located on at least one side of the negative electrode current collector. Specifically, the uncoated parts may be provided in one side by partitioning the negative electrode current collector or both sides thereof. FIGS. 1 and 2 illustrate that the uncoated parts 110a and 110b are located on both sides of the negative electrode current collector, but the present invention is not limited thereto and, the uncoated parts 110a and 110b may be located only on one side of the negative electrode current collector.

Further, the present disclosure provides a method for preparing the above-described negative electrode.

Specifically, the method for preparing a negative electrode of the present disclosure may include: applying, on a negative electrode current collector, a negative electrode slurry including a negative electrode active material and a solvent for forming a negative electrode slurry; and forming a coating layer on inclined parts of the applied negative electrode slurry.

The negative electrode slurry may further include at least one selected from a binder and a conductive agent, together with the negative electrode active material.

The solvent for forming the negative electrode slurry may include at least one selected from the group consisting of N-methylpyrrolidone (NMP), distilled water, ethanol, methanol, and isopropyl alcohol, preferably distilled water.

The coating layer may be formed simultaneously with the application of the negative electrode slurry or after the application of the negative electrode slurry.

When the coating layer is formed after the negative electrode slurry is applied, the coating layer may be formed after the application and before the drying of the negative electrode slurry, or after the application and drying of the negative electrode slurry.

The coating layer may be formed by adding the N-type organic active material or the N-type organic active material and the binder to a solvent to prepare a coating layer composition, and applying the coating layer composition to the inclined parts of the applied negative electrode slurry and drying the same.

Examples of the solvent used in the coating layer composition include water, N-methylpyrrolidone (NMP), and the like, but are not limited thereto.

The application method of the coating layer composition is not particularly limited, and may be a spray coating, a slot die coating, a gravure coating, a curtain coating, or the like. Meanwhile, the coating layer composition may also be formed by preparing a film in advance and then transferring the film to the inclined parts of the applied negative electrode slurry.

### Secondary Battery

In addition, the present disclosure provides a secondary battery including the above-described negative electrode. The secondary battery may be a lithium secondary battery.

Specifically, the secondary battery may include: the above-described negative electrode; a positive electrode facing the negative electrode; a separator interposed between the negative electrode and the positive electrode; and an electrolyte.

The positive electrode may include a positive electrode current collector and a positive electrode active material layer disposed on the positive electrode current collector.

The positive electrode current collector is not particularly limited so long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used.

The positive electrode current collector may generally have a thickness of 3 um to 500 µm.

The positive electrode active material layer is disposed on the positive electrode current collector and includes a positive electrode active material.

The positive electrode active material is a compound capable of reversibly intercalating and deintercalating lithium, and may specifically include a lithium composite metal oxide including lithium and at least one metal such as cobalt, manganese, nickel, or aluminum. More specifically, the lithium composite metal oxide may include lithium-manganese-based oxide (e.g., LiMnO₂, LiMn₂O₄, etc.), lithium-cobalt-based oxide (*e.g.*,LiCoO*₂, etc*.), lithium-nickel-based oxide (*e.g.,* LiNiO₂, *etc*.), lithium-nickel-manganese-based oxide (*e.g.,* LiNi_{1-Y}Mn_{Y}O₂ (where 0<Y<1), LiMn_{2-z}Ni_{z}O₄ (where 0<Z<2), *etc*.), lithium-nickel-cobalt-based oxide (*e.g*., LiNi_{1-Y1}Co_{Y1}O₂ (where 0<Y1<1), *etc*.), lithium-manganese-cobalt-based oxide (*e.g.,* LiCo_{1-Y2}Mn_{Y2}O₂ (where 0<Y2<1), LiMn_{2-z1}Co_{z1}O₄ (where 0<Z1<2), *etc*.), lithium-nickel-manganese-cobalt-based oxide (*e.g.,* Li(NiₚCo_{q}Mnᵣ₁)O₂ (where 0<p<1, 0<q<1, 0<r1<1, and p+q+r1=1) or Li(Niₚ₁Co_{q1}Mnᵣ₂)O₄ (where 0<p1<2, 0<q1<2, 0<r2<2, and p1+q1+r2=2), *etc*.), or lithium-nickel-cobalt-transition metal (M) oxide (*e.g*., Li(Niₚ₂Co_{q2}Mnᵣ₃M_{S2})O₂ (where M is selected from the group consisting of aluminum (Al), iron (Fe), vanadium (V), chromium (Cr), titanium (Ti), tantalum (Ta), magnesium (Mg), and molybdenum (Mo), and p2, q2, r3, and s2 are atomic fractions of each independent elements, wherein 0<p2<1, 0<q2<1, 0<r3<1, 0<S2<1, and p2+q2+r3+S2=1), *etc*.), and any one thereof or a compound of two or more thereof may be included. Among these materials, in terms of the improvement of capacity characteristics and stability of the battery, the lithium composite metal oxide may include LiCoO₂, LiMnO₂, LiNiO₂, lithium nickel manganese cobalt oxide (*e.g.,* Li (Ni_{0.6}Mn_{0.2}Co_{0.2})O₂, Li (Ni_{0.5}Mn_{0.3}Co_{0.2})O₂, or Li(Ni_{0.8}Mn_{0.1}Co_{0.1})O₂, *etc*.), or lithium nickel cobalt aluminum oxide (*e.g.,* Li (Ni_{0.8}Co_{0.15}Al_{0.05})O₂, *etc*.).

The positive electrode active material may be included in an amount of 80 wt% to 99 wt% based on the total weight of the positive electrode active material layer.

The positive electrode active material layer may further optionally include at least one selected from the group consisting of the binder and the conductive agent in addition to the above-described positive electrode active material.

The binder is a substance that assists in binding of the active material and the conductive material and binding to the current collector, and generally added in an amount of 1 wt% to 30 wt% based on the total weight of the positive electrode active material layer. Examples of the binder may include polyvinylidene fluoride, polyvinyl alcohol, carboxymethylcellulose (CMC), starch, hydroxypropylcellulose, regenerated cellulose, polyvinylpyrrolidone, polytetrafluoroethylene, polyethylene, polypropylene, an ethylene-propylene-diene terpolymer (EPDM), a sulfonated EPDM, a styrene-butadiene rubber, a fluoro rubber, various copolymers thereof, and the like.

The conductive agent is not particularly limited as long as it has conductivity without causing adverse chemical changes in the battery, and, for example, a conductive material, such as: graphite; a carbon-based material such as carbon black, acetylene black, Ketjen black, channel black, furnace black, lamp black, and thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used. Specific examples of commercially available conductive agents include acetylene black series (products of Chevron Chemical Company, Denka Singapore Private limited, Gulf Oil Company, *etc*.), Ketjen black, EC-based series (products of Armak Company), Vulcan XC-72 (products of Cabot Company), Super P (products of Timcal Company), and the like.

The conductive agent may be included in an amount of 1 wt% to 30 wt% based on the total weight of the positive electrode active material layer.

The positive electrode active material layer may be manufactured by adding the positive electrode active material and an additive including optionally the binder and/or the conductive agent in a solvent to manufacture a positive electrode slurry, and then applying, rolling, and drying this on the positive electrode current collector.

The solvent may include an organic solvent, such as N-methyl-2-pyrrolidone (NMP), and may be used in an amount such that desirable viscosity is obtained when the positive electrode active material as well as selectively the binder and the conductive agent is included. For example, the solvent may be included in an amount such that a concentration of the solid content including the positive electrode active material as well as optionally the binder and the conductive agent is in a range of 50 wt% to 95 wt%, preferably, 70 wt% to 90 wt%.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film produced from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator containing a ceramic component or a polymer material may be used to secure heat resistance or mechanical strength, and the separator having a single-layered or multi-layered structure may be optionally used.

In addition, an electrolyte used in the present disclosure may include an organic liquid electrolyte, an inorganic liquid electrolyte, a solid polymer electrolyte, a gel-type polymer electrolyte, a solid inorganic electrolyte, or a molten-type inorganic electrolyte which may be used in the manufacture of the lithium secondary battery, but is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent is preferable, and, for example, a mixture of a cyclic carbonate (*e.g.,* ethylene carbonate or propylene carbonate) having high ionic conductivity and high dielectric constant, which may increase charge/discharge performance of the battery, and a low-viscosity linear carbonate-based compound (*e.g.,* ethylmethyl carbonate, dimethyl carbonate, or diethyl carbonate) is more preferable. In this case, the performance of the electrolyte solution may be excellent when the cyclic carbonate and the chain carbonate are mixed in a volume ratio of about 1:1 to about 1:9.

The lithium salt may be used without particular limitation as long as it is a compound capable of providing lithium ions used in the lithium secondary battery. Specifically, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or the like may be used as the lithium salt. It is preferable to use the lithium salt in a concentration range of 0.1 M to 2.0 M. When the concentration of the lithium salt is in the above range, the electrolyte may have suitable conductivity and viscosity, thereby exhibiting excellent performance, and lithium ions may effectively move.

The secondary battery according to the present disclosure as described above may be suitably used in portable devices, such as mobile phones, notebook computers, and digital cameras, and electric cars such as a hybrid electric vehicle (HEV), and in particular, may preferably be used as a constituent battery for a medium and large sized battery module. Therefore, the present disclosure provides the medium and large sized battery module including the above-described secondary battery as a unit battery.

Such a medium and large sized battery module may be suitably applied to a power source requiring high power and large capacity, such as electric vehicles, hybrid electric vehicles, and power storage devices.

Hereinafter, examples of the present invention will be described in detail so that a person with ordinary skill in the art to which the present invention pertains can easily carry out the present invention. The present invention may, however, be embodied in many different forms and should not be construed as being limited to the examples set forth herein.

### Examples and Comparative Example

### Example 1: Preparation of Negative Electrode

Artificial graphite as a negative electrode active material, acetylene black as a conductive agent, styrene butadiene rubber (SBR) as a binder, and carboxymethylcellulose (CMC) as a thickener were mixed at a weight ratio of 95.35:0.50:3.00:1.15 in a solvent (water) to prepare a negative electrode slurry, the negative electrode slurry was applied onto both surfaces of a copper current collector (thickness: 8 µm), and dried and rolled to form a negative electrode active material layer. In the negative electrode active material layer, inclined parts at the end thereof according to the fluid characteristics of the negative electrode slurry was formed.

Thereafter, a coating layer was formed on the inclined parts of the negative electrode active material layer. *p-*Benzoquinone as an N-type organic active material, acetylene black as a conductive agent, and PVdF as a binder were added to NMP which is a solvent at a weight ratio of 60:35:5 to prepare a coating layer composition, and then the coating layer composition was applied on the inclined parts of the negative electrode active material layer and dried to prepare the coating layer.

The cross-sectional coating height (thickness) of the negative electrode active material layer based on the surface of the negative electrode current collector was 62 µm. In addition, the coating layer was prepared so as not to exceed the height of the negative electrode active material layer based on the surface of the negative electrode current collector.

### Example 2: Preparation of Negative Electrode

A negative electrode was prepared in the same manner as in Example 1 except for using the coating layer composition prepared by adding p-benzoquinone as an N-type organic active material, acetylene black as a conductive agent, and PVdF as a binder to NMP at a weight ratio of 40:55:5.

### Example 3: Preparation of Negative Electrode

A negative electrode was prepared in the same manner as in Example 1 except for using the coating layer composition prepared by adding p-benzoquinone as an N-type organic active material, acetylene black as a conductive agent, and PVdF as a binder to NMP at a weight ratio of 70:25:5.

### Comparative Example 1: Preparation of Negative Electrode

A negative electrode was prepared in the same manner as in Example 1 except that the coating layer was not formed on the inclined parts of the negative electrode active material layer.

### Experimental Example 1: Evaluation of Thickness Profile Using Rotary Caliper

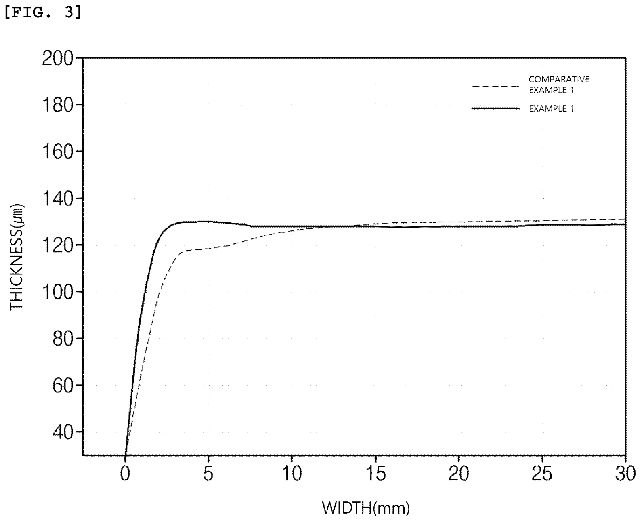

The thickness profiles of the negative electrodes prepared in Example 1 and Comparative Example 1 were evaluated by using a rotary caliper. Specifically, the thickness profile of the negative electrode was evaluated by a method of measuring the thickness in a contact manner by placing the negative electrode between rollers of the rotary caliper in the transverse direction of the negative electrode. The results are shown in FIG. 3.

As shown in FIG. 3, in the case of the negative electrode of Example 1, an additional coating is confirmed at the end of the negative electrode compared to the negative electrode of Comparative Example 1, and through this, it may be confirmed that the coating layer is formed on the inclined parts of the negative electrode active material layer.

### Experimental Example 2: Life Performance Evaluation

### <Preparation of Secondary Battery>

LiCoO₂ as a positive electrode active material, acetylene black as a conductive agent, and PVdF as a binder were added to NMP as a solvent at a weight ratio of 96.5:1.5:2.0 in an N-methylpyrrolidone solvent to prepare a positive electrode slurry, the positive electrode slurry was applied onto an aluminum current collector (thickness: 10 pm), and then dried and rolled to form a positive electrode active material layer (thickness: 105 pm), which was used as a positive electrode.

An electrode assembly including the negative electrode according to Example 1, a positive electrode facing the negative electrode, and a separator interposed between the positive electrode and the negative electrode was prepared, and the electrode assembly was accommodated in a battery case, and then the electrolyte was injected into the case and the case was sealed to prepare a secondary battery.

As the electrolyte used herein, LiPF₆ was added at a molar concentration of 1.2M to an organic solvent in which ethylene carbonate, propylene carbonate, ethyl propionate, and propyl propionate were mixed at a weight ratio of 20:10:25:45, which was used as the electrolyte.

Secondary batteries of Example 2, Example 3, and Comparative Example 1 were respectively prepared in the same manner as in Example 1, except that the negative electrodes of Example 2, Example 3, and Comparative Example 1 were respectively used.

### <Cycle Capacity Retention Evaluation>

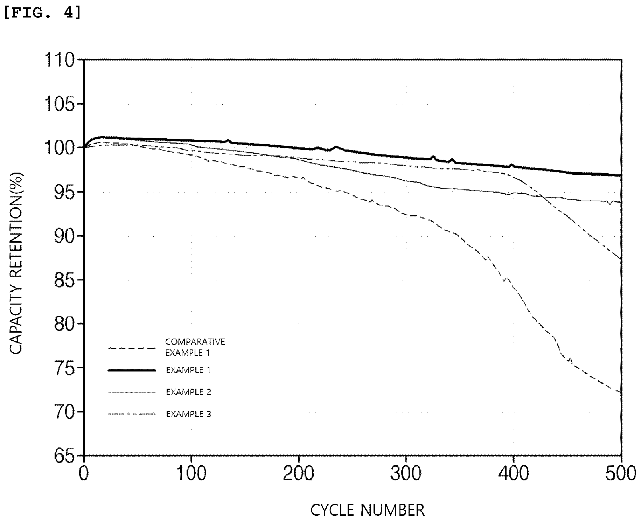

The secondary batteries of Examples and Comparative Example as prepared above were charged and discharged for 500 cycles at 25 °C under the following conditions to evaluate capacity retention. A graph of the capacity retention according to the cycle is shown in FIG. 4, and the capacity retention at 500 cycles is shown in Table 1 below.

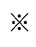 Charging and discharging conditions

Charging: CC/CV mode; 2.0C; 4.48V, 0.025C cut-off
Discharging: CC mode; 1.0C; 3.0V cut-off

**[Table 1]**

| | Capacity retention (%) @ 500 cycles |
|---|---|
| Example 1 | 96.73 |
| Example 2 | 93.75 |
| Example 3 | 87.27 |
| Comparative Example 1 | 72.24 |

Referring to Table 1 above, it may be confirmed that the negative electrodes and secondary batteries of Examples 1 to 3 in which the coating layer including the N-type organic active material is formed on the inclined parts of the negative electrode active material layer have significantly excellent life performance compared to the negative electrode and secondary battery of Comparative Example 1 having no coating later on inclined parts.

### [Description of the Symbols]

10: Negative electrode; 100: Negative electrode current collector; 110a, 110b: Uncoated part; 200: Negative electrode active material layer; 210a, 210b: Inclined part; 220: Flat part; 300a, 300b: Coating layer; H1: Maximum height of negative electrode active material layer based on surface of negative electrode current collector; H2: Maximum height of coating layer based on surface of negative electrode current collector; W: Width direction; L: Longitudinal direction

## Claims

1. A negative electrode comprising:
a negative electrode current collector;
a negative electrode active material layer that is disposed on at least one surface of the negative electrode current collector and which comprises a negative electrode active material; and
a coating layer comprising a negative-type (N-type) organic active material,
wherein the negative electrode active material layer comprises an inclined part provided in at least one side thereof by partitioning the negative electrode active material layer, and a flat part provided excluding the inclined part,
wherein the inclined part is inclined towards the surface of the negative electrode current collector, and
the coating layer is disposed on at least a portion of the inclined part.

2. The negative electrode of claim 1, wherein a maximum height of the coating layer is equal to or less than a maximum height of the negative electrode active material layer based on the surface of the negative electrode current collector.

3. The negative electrode of claim 1, wherein the inclined part is provided in both sides of the negative electrode active material layer in a width direction.

4. The negative electrode of claim 1, wherein the N-type organic active material comprises at least one selected from the group consisting of a carbonyl-based compound, an imine-based compound, a nitrile-based compound, an organic sulfur-based compound, and an azo-based compound.

5. The negative electrode of claim 1, wherein the N-type organic active material comprises at least one selected from the group consisting of p-benzoquinone, anthraquinone, dilithium terephthalate, tetra lithium salt of 2,5-dihydroxy terephthalate, 7,7,8,8-tetracyanoquinodimethane, phenylazo benzoic acid lithium salt, 1,4,5,8-naphthalenetetracarboxylic dianhydride, polydopamine, phenazine, poly (1,6-dihydropyrazino[2,3g]quinoxaline-2,3,8-triyl-7-(2H)-ylidene-7,8-dimethylidene), and poly[chalcogenoviologen-alt-triphenylamine].

6. The negative electrode of claim 1, wherein the negative electrode active material comprises at least one selected from among a carbon-based active material and a (metalloid-) metal-based active material.

7. The negative electrode of claim 6, wherein the carbon-based active material comprises at least one selected from the group consisting of artificial graphite, natural graphite, hard carbon, soft carbon, carbon black, graphene, and fibrous carbon.

8. The negative electrode of claim 6, wherein the (metalloid-) metal-based active material comprises at least one selected from the group consisting of: at least one (metalloid) metal selected from the group consisting of Li, Cu, Ni, Na, K, Rb, Cs, Fr, Be, Mg, Ca, Sr, Si, Sb, Pb, In, Zn, Ba, Ra, Ge, Al, V, Ti, and Sn; an alloy of lithium and at least one (metalloid) metal selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn; a composite of carbon and at least one (metalloid) metal selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn; and an oxide of at least one (metalloid) metal selected from the group consisting of Li, Cu, Ni, Na, K, Rb, Cs, Fr, Be, Mg, Ca, Sr, Si, Sb, Pb, In, Zn, Ba, Ra, Ge, Al, V, Ti, and Sn.

9. The negative electrode of claim 6, wherein the (metalloid-) metal-based active material comprises at least one silicon-based active material selected from SiOₓ(0≤x<2) and a silicon-carbon composite.

10. The negative electrode of claim 1, wherein the coating layer comprises the N-type organic active material in an amount of 15 wt% to 95 wt%.

11. The negative electrode of claim 1, wherein the coating layer further comprises a binder.

12. The negative electrode of claim 1, wherein the coating layer further comprises a conductive agent.

13. The negative electrode of claim 12, wherein a ratio of the weight of the N-type organic active material to the weight of the conductive agent is 0.5 to 3.5.

14. The negative electrode of claim 1, wherein:
the negative electrode current collector comprises an uncoated part which is disposed on at least one side thereof and in which the negative electrode active material layer is not disposed;
the inclined part is adjacent to the uncoated part; and
the flat part is spaced apart from the uncoated part.

15. A secondary battery comprising:
the negative electrode according to claim 1;
a positive electrode facing the negative electrode;
a separator disposed between the negative electrode and the positive electrode; and
an electrolyte.
